Europäisches Patentamt

European Patent Office

Office européen des brevets

(11) Veröffentlichungsnummer: **0 329 081**
**A1**

# EUROPÄISCHE PATENTANMELDUNG

(21) Anmeldenummer: **89102521.5**

(22) Anmeldetag: **14.02.89**

(51) Int. Cl.⁴: **G01B 21/08 , G01B 11/06 , G07D 7/00**

(30) Priorität: **15.02.88 DE 3804716**

(43) Veröffentlichungstag der Anmeldung:
**23.08.89 Patentblatt 89/34**

(84) Benannte Vertragsstaaten:
**AT BE CH DE ES FR GB GR IT LI LU NL SE**

(71) Anmelder: **Nixdorf Computer
Aktiengesellschaft
Fürstenallee 7
D-4790 Paderborn(DE)**

(72) Erfinder: **Scholich, Peter
Güntherstrasse 13-15
D-6000 Frankfurt 71(DE)**

(74) Vertreter: **Schaumburg, Thoenes &
Englaender
Mauerkircherstrasse 31 Postfach 86 07 48
D-8000 München 80(DE)**

(54) **Vorrichtung zum Messen der Dicke transportierter Wertscheine.**

(57) Eine Vorrichtung zum Messen der Dicke transportierter Wertscheine (44) umfaßt eine Meßrolle (14) und ein Meßwiderlager (13), zwischen denen die Wertscheine (44) hindurchtreten und dabei eine Auslenkbewegung der Meßrolle (14) relativ zum Meßwiderlager (13) verursacht, die mittels einer elektronischen Auswertevorrichtung ausgewertet wird. Hierbei ist das Meßwiderlager (13) ein stationäres, eine Gleitfläche für die Wertscheine (44) bildendes Element, und die Meßrolle (14) ist an einem parallel zur Ebene ihrer Auslenkbewegung bewegbaren Träger (18) gelagert, der zumindest teilweise in dem Lichtweg (36) einer Lichtschrankenanordnung (32) angeordnet ist.

Fig. 1

EP 0 329 081 A1

## Vorrichtung zum Messen der Dicke transportierter Wertscheine

Die Erfindung betrifft eine Vorrichtung zum Messen der Dicke transportierter Wertscheine zwischen einer Meßrolle und· einem Meßwiderlager durch Auswerten einer von den Wertscheinen verursachten Auslenkbewegung der Meßrolle relativ zum Meßwiderlager mittels einer elektronischen Auswertevorrichtung.

Aus der DE-OS 26 23 260 ist eine Dickenmeßvorrichtung für laminares Material bekannt, bei der die von dem zu messenden Material verursachte Auslenkung einer Meßwalze gegenüber einem als Transportwalze ausgebildeten Meßwiderlager senkrecht zur Transportebene gemessen wird. Die Meßwalze ist an einer stationären Achse gelagert und besteht aus einer elastischen Innenzone aus Gummi und einer Außenzone aus ferritischem Material. Bei einer Auslenkung der Außenzone der Meßwalze verformt sich das gummiartige Innenmaterial elastisch. Die Herstellung einer derart ausgebildeten Meßwalze ist produktionstechnisch sehr aufwendig und kostspielig, weil ferritisches Material sehr spröde und entsprechend schlecht mechanisch bearbeitbar ist. Darüber hinaus werden an die Meßwalze hohe Anforderungen bezüglich der Durchmessertoleranzen gestellt, die mit der elastischen Innenzone einerseits und der schlecht zu bearbeitenden ferritischen Außenzone andererseits nur unter groBem Aufwand einzuhalten sind.

Die Meßwalze ist bei dieser Anordnung unter Vorspannung an die Transportwalze angedrückt. Dabei wird das Gummi in der Innenzone der Meßwalze ständig elastisch verformt, wodurch der Drehwiderstand der Anordnung erhöht wird und eine schnelle Alterung des Gummis zu erwarten ist.

Die Auslenkung der Außenzone der Meßwalze wird über einen induktiven Wegaufnehmer in ein elektrisches Signal übertragen. Diese Art der Übertragung ist von Nachteil, weil die Amplitude des erhaltenen elektrischen Signals von der zeitlichen Änderung des magnetischen Flusses abhängt. Man bekommt hierdurch Signale, die auch von der Geschwindigkeit der Auslenkung der Meßwalze und nicht nur von der Größe der Auslenkung abhängen. Dies wird in der bekannten Dickenmeßvorrichtung dadurch umgangen, daß über die Auslenkung der Meßwalze die Ankopplung einer Induktionsspule an eine von einem Oszillator mit einem Wechselstrom bestimmter Frequenz gespeiste Primärspule verändert wird. Diese Anordnung ist sehr kompliziert und kostspielig. Sie ist überdies anfällig gegenüber elektromagnetischen Störimpulsen, wie sie z.B. beim Schalten von Relais auftreten können. Um ein gut verwertbares elektrisches Signal zu erhalten, muß der induktive Wegaufnehmer sehr dicht über der ferritischen Außenzone angeordnet sein. Um die Gefahr einer Berührung des induktiven Wegaufnehmers mit der ferritischen Außenzone der Meßwalze zu verhindern, wird er in der bekannten Vorrichtung bei größeren Auslenkungen der Meßwalze von dieser über einen Hebelmechanismus weggedrückt. Durch diesen komplizierten Mechanismus können nur Signale unterhalb einer maximalen Auslenkung der Meßwalze erfaßt werden, oberhalb derer die Meßwalze den induktiven Wegaufnehmer von sich wegdrückt. Die Vorrichtung hat neben hohen Produktionskosten für komplizierte mechanische und elektromagnetische Bauteile eine ungünstige Anordnung der Meßmechanik, weil sowohl die Durchmessertoleranz der Meßwalze als auch die Durchmessertoleranz der Transportwalze als Störgrößen in das Meßsignal eingehen. Der Einsatz dieser bekannten Vorrichtung zum Messen der Dicke transportierter Wertscheine ist aus diesen Gründen unzweckmäßig, denn besonders beim Transport von Wertscheinen muß gewährleistet sein, daß zuverlässig jeweils nur ein Wertschein transportiert wird, sogenannte Doppelabzüge also durch genaue Dickenauswertung in jedem Falle erkannt werden.

Der Erfindung liegt deshalb die Aufgabe zugrunde, eine Dickenmeßvorrichtung für Wertscheine anzugeben, die durch ihren Aufbau den Einfluß von Störgrößen möglichst gering hält und die keinen induktiven Aufnehmer benötigt, so daß auch elektrische Störsignale weitgehend unwirksam bleiben. Weiterhin soll die erfindungsgemäße Vorrichtung kostengünstig zu produzieren sein.

Diese Aufgabe wird bei einer Vorrichtung eingangs genannter Art erfindungsgemäß dadurch gelöst, daß das Meßwiderlager ein stationäres, eine Gleitfläche für die Wertscheine bildendes Element ist, und daß die Meßrolle an einem parallel zur Ebene ihrer Auslenkbewegung bewegbaren, vorzugsweise als um eine Drehachse schwenkbarer Hebel ausgebildeten Träger gelagert ist, der zumindest teilweise in dem Lichtweg einer Lichtschrankenanordnung angeordnet ist.

Die Erfindung hat den Vorteil, daß nur die Meßrolle als eines der beiden Meßelemente bewegt ist, was zur Verminderung von mechanischen Störeinflüssen auf das Meßsignal führt. Die Anbringung der Meßrolle an einem Träger hat den Vorteil, daß keine kompliziert und teuer herzustellende Meßwalze wie in der bekannten Vorrichtung verwendet werden muß, wodurch die Herstellungskosten der Vorrichtung gesenkt werden.

Das Übertragen der Auslenkbewegung der Meßrolle in ein elektrisches Signal mit einer Lichtschrankenanordnung hat gegenüber dem induktiven Prinzip den Vorteil, daß die zu messenden Größen direkt gemessen werden und nicht zuerst modifiziert oder zeitlich integriert werden müssen, wie dies bei einem induktiven Meßelement der Fall ist. Die Übertragungseigenschaften einer Lichtschranke sind überdies unempfindlich gegenüber elektrischen Störsignalen. Durch eine geeignete Ausgestaltung des Lichtkanals der Lichtschrankenanordnung kann das elektrische Meßsignal, das eine Funktion der Auslenkung des Trägers ist, auch z.B. überproportional erzeugt werden.

Wenn der Träger der Meßrolle ein um eine Drehachse schwenkbarer Hebel ist, kann die Auslenkung der Meßrolle an einer anderen Stelle des Hebels erfaßt werden, wobei das mechanische Meßsignal dadurch verstärkt werden kann, daß der Hebel zwei unterschiedliche Hebelarme hat, deren Enden sich vorzugsweise auf ein und derselben Seite der Drehachse des Hebels befinden, daß sich die Lagerung der Meßrolle am Ende des kürzeren Hebelarmes befindet und daß im Bewegungsbereich des längeren Hebelarmendes die Lichtschrankenanordnung angeordnet ist. Die Auslenkung der Meßwalze aufgrund des Durchgangs von Wertscheinen wird über das Längenverhältnis der Hebelarme verstärkt, was die Übertragung des mechanischen Signals in ein elektrisches Signal erleichtert.

Eine genaue Justierung der Meßvorrichtung läßt sich einfach durchführen, wenn die Position der Lichtschrankenanordnung relativ zu dem längeren Hebelarm verstellbar ist und/oder der Hebel in Ruhelage auf einem hinsichtlich seiner Position einstellbaren, vorzugsweise als exzentrischer Nocken ausgebildeten Anschlag aufliegt. Die Ausbildung dieses Anschlages als exzentrischer Nocken ist technisch einfach zu realisieren.

In einer Weiterentwicklung kann eine Beeinträchtigung des Meßsignals durch Tageslicht oder künstliche Beleuchtung dadurch vermieden werden, daß die Lichtquelle der Lichtschrankenanordnung mit einem pulsierenden Strom betrieben wird, dessen Frequenz wesentlich höher als die Frequenz optischer pulsierender Störsignale ist, wobei die Lichtquelle vorzugsweise mittels eines ihr parallelgeschalteten Schalters in einem Gleichstromkreis pulsierend betrieben wird. Die Störsignale, z.B. durch Tageslicht oder künstliche Beleuchtung, werden dadurch kompensiert, daß nur Meßsignale im Frequenzbereich des pulsierenden Stroms weiter verarbeitet werden. Bei pulsierendem Betrieb ist eine gleichmäßige Belastung der Stromversorgung gewährleistet.

Eine solche Kompensation von Störsignalen in der Auswertevorrichtung kann durch einen dem Lichtsensor der Lichtschrankenanordnung nachgeschalteten Schaltungsteil erreicht werden, an dessen Eingangsseite ein Verstärkungsteil mit Hochpaßverhalten und eine nachgeordnete Demodulationsschaltung vorgesehen sind, nach der das demodulierte Signal über einen Trennverstärker auf einen Tiefpaß geführt ist, an dessen Ausgang ein der Stärke der Wertscheine proportionales Analogsignal abgreifbar ist.

Eine langzeitige Veränderung des Lichtsignals durch Verschmutzung des Lichtweges der Lichtschrankenanordnung oder durch Alterung der optischen oder elektronischen Bauelemente wird dadurch vermieden, daß das Analogsignal als Stellgröße einer Steuerschaltung zum Einstellen des die Lichtquelle speisenden Stromes zugeführt ist. Dies hat gegenüber einer Nachregelung der Verstärkung des Meßsignals den Vorteil, daß das Verhältnis der Störsignale zu den Nutzsignalen stets gleich bleibt. Damit nicht kurzzeitige Schwankungen des Meßsignals, z.B. beim Durchgang von Wertscheinen, zu einer Änderung der Lichtintensität führen, enthält die Steuerschaltung vorzugsweise eine Anordnung zur Kompensation kurzzeitiger Intensitätsschwankungen des Analogsignals.

Die vorstehend beschriebene bekannte Auswertevorrichtung enthält eine Logik, die die Aufgabe hat, doppelt oder mehrfach liegende Wertscheine als Fehlerzustand im Transport zu erkennen. Diese Logik arbeitet mit einem Signaldiskriminator, der das Meßsignal mit einem Sollwert vergleicht. Um nun zu verhindern, daß auch längs zur Transportrichtung geknickte oder gefaltete Wertscheine zu einer Fehlermel dung führen, enthält ein Signaldiskriminator in der bei der Erfindung vorgesehenen Auswertevorrichtung zur Signalisierung des Abweichens der Dicke der Wertscheine von einem Sollwert zwei Komparatoren, denen ein gemeinsamer, vorzugsweise einstellbarer Referenzwert zugeführt ist und die durch die Signale zweier in der Lichtschrankenanordnung nebeneinander liegender Lichtschranken parallel angesteuert sind, wobei die Ausgangssignale der beiden Komparatoren miteinander konjunktiv zu einem Auswertesignal verknüpft sind. Eine Fehlermeldung erfolgt dann nur, wenn beide Komparatoren ein Ausgangssignal abgeben.

Für die Funktionssicherheit der Meßvorrichtung ist es vorteilhaft, die Lichtschrankenanordnung gegenüber dem Träger zu justieren, damit die Lichtschranke in einem reproduzierbaren Bereich und ohne Totwege arbeitet. Auch das Justieren der Meßrolle relativ zum Meßwiderlager ist vorteilhaft, damit der Abstand zwischen beiden klein genug ist, daß der dünnste zu messende Wertschein noch zu einem Signal der Lichtschrankenanordnung, jedoch nicht zu einem Stau von Wertscheinen vor der Meßanordnung führt.

Das Justieren kann unter Zuhilfenahme mechanischer Meßhilfsmittel wie z.B. Meßlehren oder Meßfühler, erfolgen. Da die zu justierenden Teile in der Regel an schlecht zugänglichen Stellen liegen, kann das Justieren mit mechanischen Meßhilfsmitteln aufwendig und kostspielig sein.

Daher wird die erfindungsgemäße Vorrichtung auf eine vorgegebene Position der Lichtschrankenanordnung relativ zum Träger und auf einen vorgegebenen Abstand zwischen Meßrolle und Meßwiderlager dadurch justiert, daß ein vom Eintauchen das Trägers in den Lichtweg der Lichtschrankenanordnung abhängiges Spannungssignal gespeichert wird, wenn sich der Träger nicht im Lichtweg befindet und die Meßrolle am Meßwiderlager anliegt, daß beim nachfolgenden Justieren der Lichtschrankenanordnung relativ zum Träger das gespeicherte Spannungssignal mit einer der vorgegebenen Position entsprechenden ersten Teilspannung des aktuellen Spannungssignals verglichen wird, wobei ein Signal abgegeben wird, wenn die vorgegebene Position der Lichtschrankenanordnung erreicht wird, daß das aktuelle Spannungssignal dieser Position gespeichert wird, und daß beim nachfolgenden Justieren der Meßrolle relativ zum Meßwiderlager das gespeicherte Spannungssignal mit einer dem vorgegebenen Abstand entsprechenden zweiten Teilspannung des dann aktuellen Spannungssignals verglichen wird, wobei ein Signal abgegeben wird, wenn der vorgegebene Abstand zwischen Meßrolle und Meßwiderlager erreicht wird.

Die Abgabe der Signale kann akustisch oder optisch an gut sichtbaren Stellen erfolgen. Durch dieses Verfahren wird das Justieren der erfindungsgemäßen Vorrichtung wesentlich erleichtert, weil die zu justierenden Teile der Vorrichtung ohne Sichtkontakt justiert werden können.

Die Erfindung wird im folgenden anhand der Zeichnung weiter beschrieben. In dieser zeigen:

Figur 1 eine teilschematische Seitenansicht eines Ausführungsbeispieles,

Figur 2 den Querschnitt II-II nach Figur 1,

Figur 3 den Querschnitt III-III nach Figur 1,

Figur 4 eine elektronische Auswertevorrichtung für Signale einer Lichtschranke,

Figur 5 eine Schaltungsanordnung zur Spannungsversorgung einer Lichtquelle in der Lichtschranke,

Figur 6 eine Hilfsschaltung zur Justage der Vorrichtung nach Figur 1.

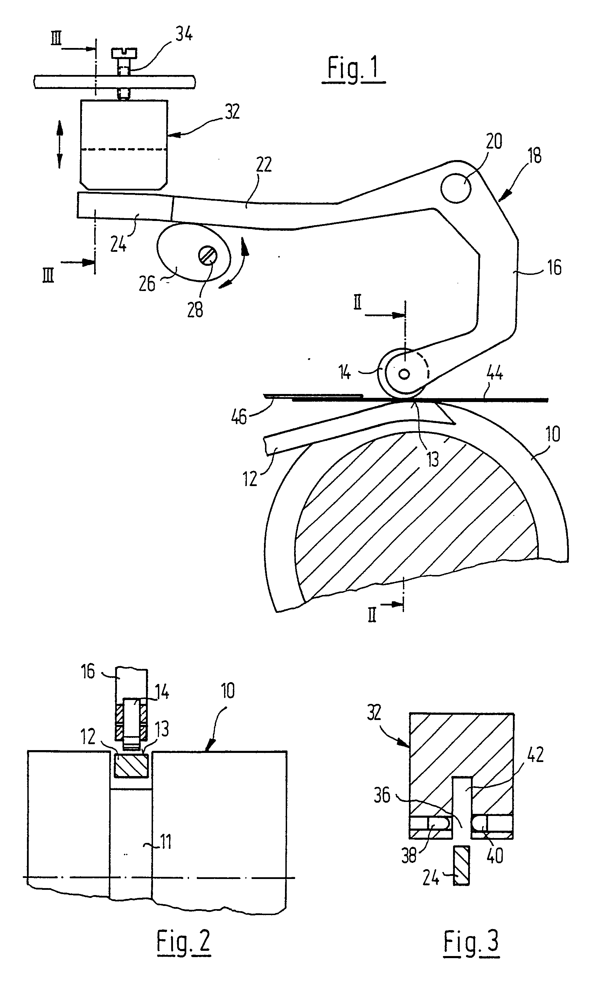

Figur 1 zeigt die Seitenansicht des mechanischen Teils einer Meßanordnung. Eine im Transportweg des Blattmaterials befindliche Transportwalze 10 hat in ihrer Oberfläche eine durchmesserverminderte Aussparung 11 (Figur 2). In dieser Aussparung 11 ist ein stabiles Element 12 stationär angeordnet, dessen Oberkante mit der Umfangsfläche der Transportwalze 10 im wesentlichen abschließt und ein Meßwiderlager 13 für eine Meßrolle 14 bildet. Die Lagerung der Meßrolle 14 befindet sich am Ende eines kürzeren Hebelarmes 16 eines zweiarmigen Hebels 18, dessen Drehachse 20 parallel zur Drehachse der Transportwalze 10 liegt. Der andere Arm 22 des Hebels 18 ist länger als der mit der Transportrolle 14 versehene Hebelarm 16. Der Hebel 18 liegt mit seinem längeren Hebelarm 22 auf einem elliptisch geformten Exzenter 26, der durch eine Stellschraube 28 verstellt werden kann. Über dem Ende 24 des Hebelarms 22 ist eine Lichtschranke 32 angeordnet, welche über eine Stellschraube 34 parallel zur Auslenkungsrichtung des Hebelarmendes 24 verstellbar ist.

Beim Durchgang von Wertscheinen zwischen Meßwiderlager 13 und Meßrolle 14 wird die Meßrolle 14 senkrecht zur Transportebene ausgelenkt. Diese Auslenkung wird über den Hebel 18 auf das Ende 24 des längeren Hebelarmes 22 übertragen. Dabei wird die Auslenkung entsprechend dem Längenverhältnis der Hebelarme 22 und 16 verstärkt. Das Hebelarmende 24 taucht bei einer Auslenkung der Meßrolle 14 in den Lichtweg 36 der Lichtschranke 32 ein und erzeugt dort ein der Auslenkung proportionales elektrisches Signal. Die Ruhelage des Hebels 18 kann an dem Exzenter 26 mit einer Stellschraube 28 verstellt werden. Um einen Stau von Wertscheinen vor der Meßanordnung zu verhindern, ist der Abstand zwischen Meßwiderlager 13 und Meßrolle 14 über die Ruhelage des Hebels 18 so einzustellen, daß er etwas geringer als der dünnste zu mes sende Wertschein ist. Um Totwege bei der Übertragung des mechanischen Signals in ein elektrisches Signal zu vermeiden und zu gewährleisten, daß jeder Wertschein ein Meßsignal erzeugt, ist die Lichtschranke 32 mit der Stellschraube 34 so zu verstellen, daß bei justiertem Hebel 18 das Ende 24 des Hebelarmes 22 gerade in den Lichtweg 36 der Lichtschranke 32 eintaucht.

Figur 2 verdeutlicht als Schnitt II-II aus Figur 1 die bereits beschriebene Anordnung von Meßrolle 14 und Meßwiderlager 13 im Transportweg.

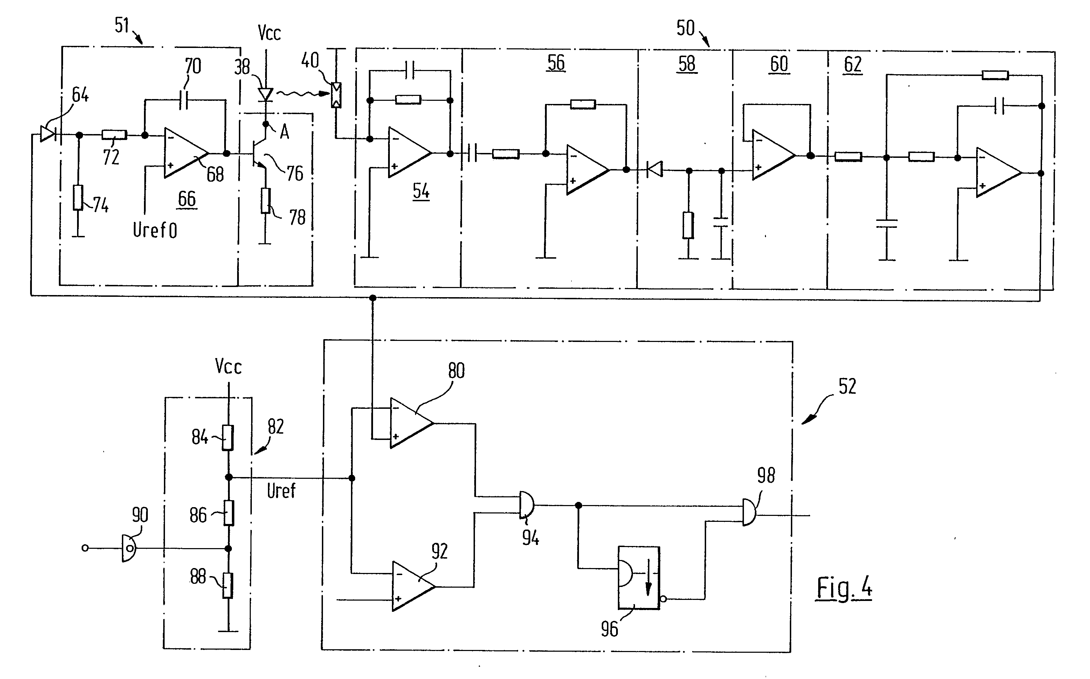

Figur 3 zeigt den Querschnitt III-III der Lichtschranke 32 aus Figur 1. Sie hat an ihrer dem Hebelarmende 24 zugewandten Seite zwei Schenkel, in denen die Lichtquelle 38 und der Lichtsensor 40 befestigt sind. Zwischen Lichtquelle 38 und Lichtsensor 40 befindet sich eine Aussparung 42, in die das Hebelarmende 24 bei einer Auslenkbewegung der Meßrolle 14 eintaucht.

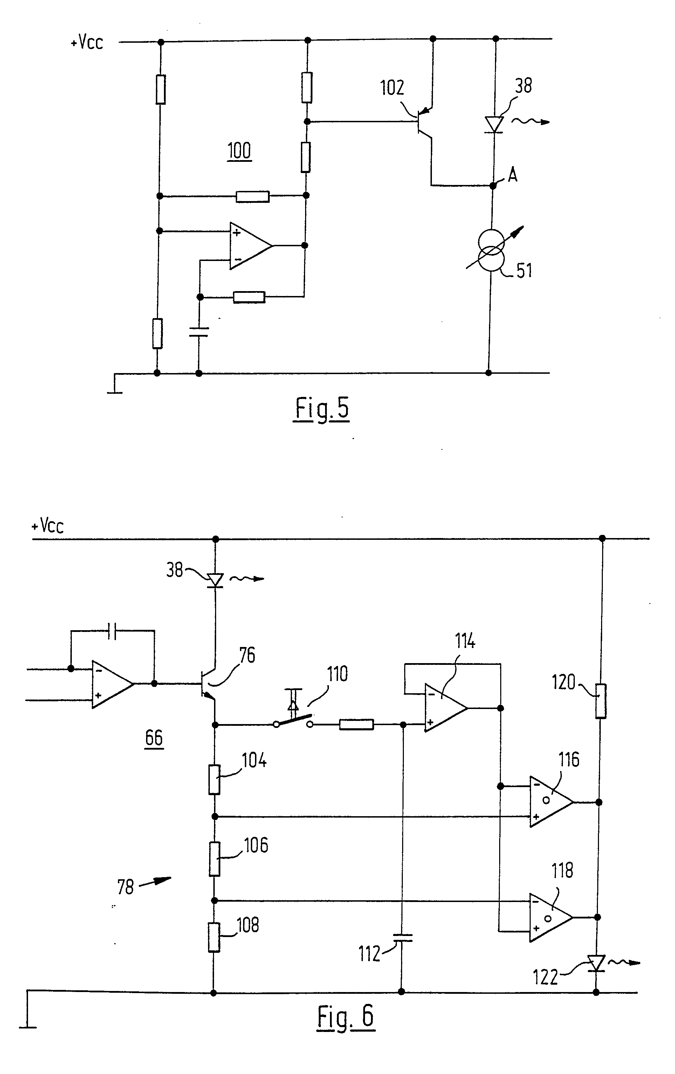

Figur 4 zeigt die Schaltungsanordnung der elektronischen Auswertevorrichtung. Diese besteht aus einer Meßschaltung 50, einer Lichtschrankensteuerschaltung 51 und einer Fehlererkennung mit Signaldiskriminator 52. Eine Leuchtdiode 38 wird mit einer hochfrequent getakteten Gleichspannung als Lichtquelle für die Lichtschranke 32 (Figur 1,3) betrieben. Der Lichtsensor 40, der ein Fototransistor sein kann, erzeugt demnach ein hochfrequentes, durch das Eintauchen des Hebelarmendes 24 in den Lichtweg 36 der Lichtschranke 32 (Figur 1,3) amplitudenmoduliertes Signal, welches am Eingang der Meßschaltung 50 anliegt. Dieses Signal wird in einem Eingangsverstärker 54 und einem Wechselspannungsverstärker 56 mit Hochpaßverhalten verstärkt, wobei nieder frequente Störungen unterdrückt werden. Im Schaltungsteil 58 wird das Signal demoduliert und gelangt über einen Trennverstärker 60 auf einen Tiefpaß 62 zweiter Ordnung. In diesem werden mechanische Schwingungen und die 100 Hertz-Frequenz von Kunstlicht ausgefiltert. Am Ausgang der Meßschaltung 50 ist ein Analogsignal abgreifbar. Dieses Signal ist ein Gleichspannungssignal, dessen Amplitude von der Lichtintensität der Leuchtdiode 38 und dem Eintauchen des Hebelarmendes 24 in den Lichtkanal 36 der Lichtschranke 32 abhängt. Das Analogsignal wird in der Lichtsteuerschaltung 51 über eine Entkoppeldiode 64 auf einen Intensitätsregler 66 geführt, der durch einen Operationsverstärker 68 gebildet ist. Der nicht invertierende Eingang des Operationsverstärkers 68 ist mit einer Referenzspannung Uref0 verbunden. Im Gegenkopplungszweig des Operationsverstärkers 68 ist ein Kondensator 70 angeordnet. Die Zeitkonstante aus dem Kondensator 70 und am invertierenden Eingang liegenden Widerständen 72 und 74 ist so groß gewählt, daß Lichtschwankungen, die von die Meßanordnung durchlaufenden Wertscheinen erzeugt werden, keine Änderung der Ausgangsspannung des Operationsverstärkers 68 bewirken. Es werden nur Langzeitveränderungen der Intensität des auf den Lichtsensor 40 auftreffenden Lichtes ausgeregelt, die durch Verschmutzung des Lichtweges 36 oder durch Alterung der Elemente 38,40 hervorgerufen werden. Das Ausgangssignal des Operationsverstärkers 68 ist auf die Basis eines Transistors 76 geführt, dessen Kollektorwiderstand zur Versorgungsspannung +Vcc durch die Leuchtdiode 38 gebildet ist. Der Emitterwiderstand 78 wird von einer Schaltung gebildet, die in Figur 5 dargestellt ist.

Die Auswerteschaltung 52 enthält an ihrem Eingang einen Komparator 80, an dessen nicht invertierendem Eingang das Analogsignal anliegt und dessen invertierender Eingang mit einer Vergleichsspannung beaufschlagt ist. Diese Vergleichsspannung ist ein Maß für die doppelte Minimaldicke der Wertscheine. Sie ist entweder durch einen Spannungsteiler 82, bestehend aus drei zwischen der Versorgungsspannung +Vcc und Masse in Reihe geschalteten Widerständen 84, 86 und 88 fest vorgegeben, oder sie kann durch eine Treiberschaltung 90 auf unterschiedliche vorgegebene Spannungswerte für verschiedene Blattstärken umgeschaltet werden. Ein zweiter Komparator 92 erhält an seinem nicht invertierenden Eingang ein Analogsignal von einer weiteren, auf gleicher Höhe wie die Meßanordnung 13,14 im Transportweg befindlichen Meßanordnung mit Schaltungen der in Figur 4 mit 50 und 51 bezeichneten Art. Die invertierenden Eingänge der Komparatoren 80 und 92 sind parallel geschaltet. Die Ausgänge der beiden Komparatoren 80,92 sind in einem UND-Glied 94 zusammengeführt. Am Ausgang des UND-Gliedes 94 wird nur dann ein Signal erzeugt, wenn beide Komparatoren 80 und 92 ein Signal abgeben. Parallel zur Transportrichtung geknicktes Material führt dadurch nicht zu Fehlermeldungen. Wenn nur eine Meßanordnung vorgesehen ist, entfallen der Komparator 92 und das UND-Glied 94. Der Ausgang des UND-Gliedes 94 führt auf den ersten Eingang eines zweiten UND-Gliedes 98 und über eine Zeitschaltung 96 auf den zweiten Eingang des UND-Gliedes 98. Die Zeitschaltung 96 ist so eingestellt, daß das Eingangssignal für die Laufzeit einer halben Wertscheinlänge invertiert wird. Hierdurch werden Fehlermeldungen unterdrückt, die auf quer zur Transportrichtung gefaltete Wertscheine wie z.B. eine umgeknickte Ecke zurückzuführen sind. Am Ausgang des UND-Gliedes 98 erscheint ein Doppelgriffsignal, welches auf eine Zählereinrichtung gegeben werden kann oder mit dem man eine mechanische Blattableitungsvorrichtung steuern kann.

Figur 5 zeigt eine Schaltungsanordnung zur Taktung der Versorgungsspannung der Leuchtdiode 38. Die Taktfrequenz wird von einem astabilen Multivibrator 100 erzeugt, dessen Ausgangssignal der Basis eines pnp-Transistors 102 zugeführt ist. Die Emitter-Kollektorstrecke des Transistors 102 ist der Leuchtdiode 38 parallel geschaltet. Diese wird im Takt der Pulsfolge des astabilen Multivibrators 100 kurzgeschlossen. Die Schaltungsanordnung wird an den Punkt A am Ausgang der Lichtschrankensteuerschaltung 51, an Masse und an die Versorgungsspannung +Vcc in der Schaltung 5l aus Figur 4 angeschlossen.

Figur 6 zeigt eine Hilfsschaltungsanordnung für die Justage des Hebels 18 und der Lichtschranke 32 aus Figur 1. Der in Figur 4 abgebildete Emitterwiderstand 78 des Transistors 76 ist aus drei in Reihe geschalteten Teilwiderständen 104,106 und 108 gebildet. Diese bilden einen Spannungsteiler. Die Spannung zwischen den Widerständen 104 und 106 liegt an dem nicht invertierenden Eingang eines ersten Komparators 116 an. Die Spannung zwischen den Widerständen 106 und 108 liegt am invertierenden Eingang eines zweiten Komparators 118 an. Der Emitter des Transistors 76 ist über einen Tastschalter 110 mit dem ersten Anschluß eines Speicherkondensators 112 verbunden, dessen zweiter Anschluß an Masse liegt. Der erste Anschluß des Kondensators 112 ist außerdem mit dem Eingang eines Trennverstärkers 114 verbunden. Dessen Ausgang ist auf den invertierenden Eingang des ersten Komparators 116 und auf den nicht invertierenden Eingang des zweiten Komparators 118 gelegt. Die Ausgangsstufen der Komparatoren 116, 118 sind in offener Kollektorschaltung ausgeführt. Die Ausgänge der Komparatoren 116,118 sind parallel geschaltet und haben einen gemeinsamen Kollektorwiderstand 120 zur Versorgungsspannung +Vcc. Der Kollektorwiderstand dient als Vorwiderstand für ein Anzeigeelement 122, dessen zweiter Anschluß an Masse liegt.

Anhand der Figuren 1 und 6 wird nachfolgend der Justagevorgang für den Hebel 18 und die Lichtschranke 32 beschrieben:

Zunächst wird der Exzenter 26 mit der Stellschraube 28 so eingestellt, daß die Meßrolle 14 am Meßwiderlager 13 anliegt. Dann wird die Höhe der Lichtschranke 32 mit der Stellschraube 34 so verstellt, daß das Hebelarmende 24 nicht in den Lichtweg 36 der Lichtschranke 32 eintaucht. Am Emitter des Transistors 76 stellt sich nun eine Spannung ein, die einem 100 % -Wert der Lichtintensität der Leuchtdiode 38 entspricht. Durch Betätigen des Tastschalters 110 wird diese Spannung in den Speicherkondensator 112 geladen. Sie liegt über den Trennverstärker auch als Referenzspannung an den Komparatoren 116 und 118. Nun wird die Lichtschranke 32 so weit in Richtung auf das Hebelarmende 24 verstellt, daß letzteres in den Lichtweg 36 der Lichtschranke 32 eintaucht, was zu einer teilweisen Abdunkelung des Lichtsensors 40 führt. Die Lichtschrankensteuerschaltung 51 ist nun bestrebt, den alten Helligkeitswert durch Erhöhung des Speisestromes der Leuchtdiode 38 wieder herzustellen. Damit steigt auch die Spannung an dem Spannungsteiler zwischen den Teilwiderständen 104 und 106 des Emitterwiderstandes 78. Sobald diese Spannung den vorherigen 100 % -Wert erreicht hat, schaltet der Komparator 116, wodurch das Anzeigeelement 122 aufleuchtet. Das Teilungsverhältnis der Widerstandswerte der Widerstände 104, 106 und 108 ist so gewählt, daß das Aufleuchten des Anzeigeelementes 122 anzeigt, daß nun die Lichtschranke 32 ihre richtige Lage relativ zum Hebelarmende 24 aus Figur 1 und 3 erreicht hat. Am Emitter des Transistors 76 hat sich nun eine Spannung eingestellt, die etwa 110 % des ursprünglichen Wertes entspricht. Durch abermaliges Betätigen des Tastschalters 110 wird dieser neue Spannungswert in den Kondensator 112 geladen. Nun wird das Hebelarmende 24 des Hebelarmes 22 mit Hilfe des Exzenters 26 so weit verstellt, bis durch das weitere Ansteigen des Stromes durch die Leucht diode 38 der Spannungswert zwischen den Widerständen 106 und 108 den im Kondensator gespeicherten 110 %-Wert erreicht. Die Ausgangsstufe des zweiten Komparators 118 wird nun leitend, was zu einem Erlöschen des Anzeigeelements 122 führt. Dies ist ein Zeichen dafür, daß der Abstand 30 zwischen Meßrolle 14 und Meßwiderlager 13 so eingestellt ist, daß jeder Wertschein ein Signal erzeugt, jedoch ein Stau der Wertscheine vor der Meßanordnung ausgeschlossen ist.

## Ansprüche

1. Vorrichtung zum Messen der Dicke transportierter Wertscheine zwischen einer Meßrolle und einem Meßwiderlager durch Auswerten einer von den Wertscheinen verursachten Auslenkbewegung der Meßrolle relativ zum Meßwiderlager mittels einer elektronischen Auswertevorrichtung, dadurch **gekennzeichnet,** daß das Meßwiderlager (13) ein stationäres, eine Gleitfläche für die Wertscheine bildendes Element ist, und daß die Meßrolle (14) an einem parallel zur Ebene ihrer Auslenkbewegung bewegbaren, vorzugsweise als um eine Drehachse (20) schwenkbarer Hebel (18) ausgebildeten Träger gelagert ist, der zumindest teilweise in dem Lichtweg (36) einer Lichtschrankenanordnung (32) angeordnet ist.

2. Vorrichtung nach Anspruch 1, dadurch **gekennzeichnet,** daß der Hebel (18) zwei unterschiedlich lange Hebelarme (16, 22) hat, deren Enden sich vorzugsweise auf ein und derselben Seite der Drehachse (20) des Hebels (18) befinden, daß sich die Lagerung der Meßrolle (14) am Ende des kürzeren Hebelarmes (16) befindet, und daß im Bewegungsbereich des längeren Hebelarmes (22) die Lichtschrankenanordnung (32) angeordnet ist.

3. Vorrichtung nach Anspruch 2, dadurch **gekennzeichnet,** daß die Position der Lichtschrankenanordnung (32) relativ zu dem längeren Hebelarm (22) verstellbar ist und/oder der Hebel (18) in Ruhelage auf einem hinsichtlich seiner Position einstellbaren, vorzugsweise als exzentrischer Nocken (26) ausgebildeten Anschlag aufliegt.

4. Vorrichtung nach einem der Ansprüche 1 bis 3, dadurch **gekennzeichnet,** daß die Lichtquelle (38) der Lichtschrankenanordnung (32) mit einem pulsierenden Strom betrieben wird, dessen Frequenz wesentlich höher als die Frequenz optischer pulsierender Störsignale ist, wobei die Lichtquelle (38) vorzugsweise mittels eines ihr parallelgeschalteten Schalters in einem Gleichstromkreis pulsierend betrieben wird.

5. Vorrichtung nach einem der Ansprüche 1 bis 4, dadurch **gekennzeichnet,** daß die Auswertevorrichtung einen dem Lichtsensor (40) der Lichtschrankenanordnung (32) nachgeschalteten Schaltungsteil (50) zur Kompensation von Störeinflüssen enthält, an dessen Eingangsseite ein Verstärkungsteil (54, 56) mit Hochpaßverhalten und eine nachgeordnete Demodulationsschaltung (58) vorgesehen ist, nach der das demodulierte Signal über einen Trennverstärker (60) auf einen Tiefpaß (62) geführt ist, an dessen Ausgang ein der Dicke der Wertscheine proportionales Analogsignal abgreifbar ist.

6. Vorrichtung nach Anspruch 5, dadurch **gekennzeichnet,** daß das Analogsignal als Stellgröße einer Steuerschaltung (51) zum Einstellen des die Lichtquelle (38) speisenden Stroms zugeführt ist, wobei die Steuerschaltung (51) vorzugsweise eine Anordnung zur Kompensation kurzzeitiger Intensitätsschwankungen des Analogsignals enthält.

7. Vorrichtung nach einem der vorhergehenden Ansprüche, mit einem Signaldiskriminator (52) in der Auswertevorrichtung zur Signalisierung des Abweichens der Dicke der Wertscheine von einem Sollwert, dadurch **gekennzeichnet,** daß die Ausgangssignale zweier Komparatoren (80, 92), denen ein gemeinsamer, vorzugs weise einstellbarer Referenzwert zugeführt ist und die durch die Signale zweier in der Lichtschrankenanordnung nebeneinanderliegender Lichtschranken parallel angesteuert sind, wobei die Ausgangssignale der beiden Komparatoren miteinander konjunktiv zu einem Auswertesignal verknüpft sind.

8. Verfahren zum Justieren einer Vorrichtung nach einem der Ansprüche 1 bis 7 auf eine vorgegebene Position der Lichtschrankenanordnung (32) relativ zum Träger (18) und auf einen vorgegebenen Abstand zwischen Meßrolle (14) und Meßwiderlager (13), dadurch **gekennzeichnet,** daß ein vom Eintauchen des Trägers (18) in den Lichtweg (36) der Lichtschrankenanordnung (32) abhängiges Spannungssignal gespeichert wird, wenn sich der Träger (18) nicht im Lichtweg (36) befindet und die Meßrolle (14) am Meßwiderlager (13) anliegt, daß beim nachfolgenden Justieren der Lichtschrankenanordnung (32) relativ zum Träger (18) das gespeicherte Spannungssignal mit einer der vorgegebenen Position entsprechenden ersten Teilspannung des aktuellen Spannungssignals verglichen wird, wobei ein Signal abgegeben wird, wenn die vorgegebene Position der Lichtschrankenanordnung (32) erreicht wird, daß das aktuelle Spannungssignal dieser Position gespeichert wird, und daß beim nachfolgenden Justieren der Meßrolle (14) relativ zum Meßwiderlager (13) das gespeicherte Spannungssignal mit einer dem vorgegebenen Abstand entsprechenden zweiten Teilspannung des dann aktuellen Spannungssignals verglichen wird, wobei ein Signal abgegeben wird, wenn der vorgegebene Abstand zwischen Meßrolle (14) und Meßwiderlager (13) erreicht wird.

9. Schaltungsanordnung zur Durchführung des Verfahrens nach Anspruch 8, dadurch **gekennzeichnet,** daß das Spannungssignal an einem Spannungsteiler (78) erzeugt wird, der im Stromkreis der Lichtquelle (38) angeordnet ist.

10. Schaltungsanordnung nach Anspruch 9, dadurch **gekennzeichnet,** daß der Spannungsabfall an dem Spannungsteiler (78) über einen Tastschalter (110) auf einen Speicher (112) schaltbar ist, und daß der im Speicher (112) abgespeicherte Spannungswert vorzugsweise auf die ersten Eingänge zweier Komparatoren (116, 118) geführt ist und im ersten Komparator (116) mit der ersten Teilspannung und im zweiten Komparator (118) mit der zweiten Teilspannung verglichen wird, wobei die Ausgänge der beiden Komparatoren (116, 118) mit einem Anzeigeelement (122) verbunden sind.

Fig.1

34

III

32

22

20

18

24

16

26

28

II

14

44

46

13

12

10

II

16

14

10

12

13

11

Fig.2

32

42

36

38

24

40

Fig.3

Fig. 4

Fig.5

Fig. 6

## EINSCHLÄGIGE DOKUMENTE

EP 89102521.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | <u>DE - A1 - 2 623 260</u><br>(DE LA RUE)<br>    * Gesamt * <br><br>— | A | G 01 B 21/08<br>G 01 B 11/06<br>G 07 D  7/00 |
| A | <u>US - A - 4 338 722</u><br>(DELMAS)<br>    * Gesamt * <br><br>- - - - | | |

| RECHERCHIERTE SACHGEBIETE (Int. Cl.4) |
|---|
| G 01 B  5/00<br>G 01 B  7/00<br>G 01 B 11/00<br>G 01 B 21/00<br>G 06 M  7/00<br>G 07 D  7/00<br>G 07 D  5/00 |

Der vorliegende Recherchenbericht wurde für alle Patentansprüche erstellt.

| Recherchenort | Abschlußdatum der Recherche | Prüfer |
|---|---|---|
| WIEN | 29-05-1989 | TOMASELLI |